Europäisches Patentamt

European Patent Office

Office européen des brevets

(11) Veröffentlichungsnummer: **0 449 092 B1**

## EUROPÄISCHE PATENTSCHRIFT

(45) Veröffentlichungstag der Patentschrift: **09.11.94**

(51) Int. Cl.5: **C08F 10/02**

(21) Anmeldenummer: **91104303.2**

(22) Anmeldetag: **20.03.91**

(54) **Verfahren zur Herstellung von Ethylenpolymerisaten bei Drücken oberhalb von 500 bar in einem Rohrreaktor mit Einspritzfinger.**

(30) Priorität: **30.03.90 DE 4010271**

(43) Veröffentlichungstag der Anmeldung:
**02.10.91 Patentblatt 91/40**

(45) Bekanntmachung des Hinweises auf die
Patenterteilung:
**09.11.94 Patentblatt 94/45**

(84) Benannte Vertragsstaaten:
**AT BE CH DE DK ES FR GB IT LI NL SE**

(56) Entgegenhaltungen:
**EP-A- 0 121 755**
**EP-A- 0 207 161**
**EP-A- 0 244 855**
**EP-A- 0 313 076**
**EP-A-02 457 73**

(73) Patentinhaber: **BASF Aktiengesellschaft**
**Carl-Bosch-Strasse 38**
**D-67063 Ludwigshafen (DE)**

(72) Erfinder: **Koehler, Gernot, Dr.**
**Calvinstrasse 7c**
**W-6520 Worms 1 (DE)**
Erfinder: **Klimesch, Roger, Dr.**
**Georg-Froeba-Strasse 43**
**W-6146 Alsbach-Haehnlein (DE)**

Rank Xerox (UK) Business Services
(3.10/3.09/3.3.3)

EP 0 449 092 B1

**Beschreibung**

Die vorliegende Erfindung betrifft ein Verfahren zur Herstellung von Ethylenpolymerisaten durch Homopolymerisation von Ethylen oder Copolymerisation von Ethylen mit Ethylen copolymerisierbaren Verbindungen in einem kontinuierlich betriebenen, rohrförmigen Polymerisationssystem bei Drücken von 500 bis 5000 bar und Temperaturen von 40 bis 450°C in Gegenwart von radikalisch zerfallenden Polymerisationsinitiatoren, indem man dem Polymerisationssystem an dessen Einlaßstelle Ethylen, gegebenenfalls im Gemisch mit Comonomer, Sauerstoff und/oder Regler und mindestens an einer zweiten Stelle hinter der Einlaßstelle einen Initiator zuführt, das dadurch gekennzeichnet ist, daß man den Initiator über einen Einspritzfinger in das Polymerisationssystem einführt.

Weiterhin betrifft die vorliegende Erfindung eine Vorrichtung zur Durchführung des Verfahrens.

Polymerisationsverfahren, bei denen man Ethylen in rohrförmigen Polymerisationssystemen bei Drücken von 500 bis 5000 bar und Temperaturen von 50 bis 450°C in Gegenwart von radikalisch zerfallenden Polymerisationsinitiatoren, wie Sauerstoff oder peroxidischen Initiatoren, gegebenenfalls in Gegenwart von Reglern und Comonomeren polymerisieren können, sind bekannt. Bei diesem Verfahren können beträchtliche Temperaturschwankungen auftreten. Es ist auch bekannt, daß man bei der Hochdruckpolymerisation von Ethylen in rohrförmigen Reaktoren die Initiatoren an einer zweiten in der Strömungsrichtung des Ethylens liegenden Stelle in gelöster oder suspendierter Form in den Reaktor einleiten kann.

So wird beispielsweise in der DE-OS 3 308 926 ein Verfahren zur Herstellung von Ethylenpolymerisaten durch Homopolymerisation von Ethylen oder Copolymerisation von Ethylen mit Ethylen copolymerisierbaren Verbindungen in einem kontinuierlich betriebenen, rohrförmigen Polymerisationssystem bei Drücken von 500 bis 5000 bar und Temperaturen von 40 bis 450°C in Gegenwart von radikalisch zerfallenden Polymerisationsinitiatoren beschrieben, indem man den Polymerisationssystem an dessen Einlaßstelle ein Gemisch aus Ethylen, Sauerstoff, gegebenenfalls Regler und gegebenenfalls Comonomer und zusätzlich an einer zweiten Stelle hinter der Einlaßstelle entlang des Polymerisationssystems, an der die Temperatur der Sauerstoff initiierten Reaktion bereits das Maximum überschritten hat, einen Peroxidinitiator zuführt, dessen kennzeichnendes Merkmal es ist, daß an der zweiten Zuführungsstelle die Temperatur im Bereich von 261 bis 274°C liegt und Methylisobutylketonperoxid gelöst in einem inerten Lösungsmittel zugeführt wird.

Bei diesem Verfahren kann es aber zu Nebenreaktionen durch örtliche überkonzentration von Peroxid kommen, was zu inhomogenen Produkten führen kann. Weiterhin ist der Peroxidverbrauch relativ hoch.

Aufgabe der vorliegenden Erfindung war es, ein Verfahren zur Herstellung von Ethylenpolymerisaten durch Homopolymerisation von Ethylen oder Copolymerisation von Ethylen mit Ethylen copolymerisierbaren Verbindung aufzuzeigen, das weniger Initiator verbraucht, weniger Zersetzungen und Nebenreaktionen sowie geringere Temperaturschwankungen aufweist und damit zu homogeneren Produkten führt.

Demgemäß wurde das eingangs definierte Verfahren gefunden.

Außerdem wurde eine Vorrichtung zur Durchführung dieses Verfahrens gefunden.

Zu den einzelnen Stufen des Verfahrens und den Merkmalen der Vorrichtung ist folgendes auszuführen:

Das Verfahren ist bevorzugt auf die Homopolymerisation von Ethylen aber auch auf die Copolymerisation des Ethylens mit Ethylen copolymerisierbaren Verbindungen anwendbar. Somit sind alle Comonomeren geeignet, die unter Hochdruckbedingungen mit Ethylen in Gegenwart von Radikale bildenden Polymerisationsinitiatoren copolymerisiert werden können, wie beispielsweise (Meth)acrylsäure, (Meth)acrylsäureester von Alkoholen mit 1 bis 8 C-Atomen, (Poly)ethylenglykol-mono-(meth)-acrylsäureester mit 1 bis 20 Ethylenoxid-Einheiten im Molekül, Maleinsäure, Maleinsäureanhydrid, Fumarsäure, Itaconsäure, Crotonsäure, Ester oder Halbester der genannten Säure mit Alkoholen mit 1-8 C-Atomen, Vinylacetat, Vinylpropionat oder deren Gemische.

Der Comonomergehalt im Copolymerisat beträgt üblicherweise bis zu 30 Gew.-%, bevorzugt bis 20 Gew.-%.

Die Polymerisation des Ethylens, gegebenenfalls zusammen mit weiteren Comonomeren, erfolgt bei Drücken von 500 bis 5000 bar, vorzugsweise 1500 bis 3000 bar. Die Temperaturen im Polymerisationssystem liegen zwischen 40 und 450°C, vorzugsweise zwischen 150 und 350°C. Die mittleren Verweilzeiten betragen üblicherweise 30 bis 120 sec. Dabei ist die mittlere Verweilzeit definiert durch das Verhältnis des Apparatevolumens zu dem im Mittel pro Zeiteinheit durch das Apparatevolumen hindurchgetretene Produktvolumen. Die Bedingungen im Polymerisationssystem lassen sich apparativ in sogenannten Rohrreaktoren einstellen. Unter Rohrreaktoren versteht man üblicherweise rohrförmige Polymerisationsgefäße, deren Längenausdehnung das über 2000-fache, bevorzugt das 5000 bis 50000-fache des Rohrdurchmessers beträgt. Ein Teil der Polymerisationswärme kann durch Kühlung des Rohrreaktors von außen mit Wasser abgeführt werden. Die Polymerisation des Ethylens bzw. des Ethylens mit Comonomeren im Rohrreaktor

2

wird kontinuierlich betrieben (vgl. "Ullmann's Encyclopädie der technischen Chemie", Verlag Chemie GmbH, Weinheim, Band 19, (1980), Seiten 169 bis 195).

Der Rohrreaktor kann auch einem Autoklaven-Reaktor nachgeschaltet sein.

Die Polymerisation des Ethylens kann z.B. durch Zufuhr von Luftsauerstoff initiiert werden, wobei die Sauerstoffkonzentration 0,5 bis 100, bevorzugt 0,5 bis 50 mol ppm, bezogen auf die Menge eines Ethylens beträgt. Das gasförmige Gemisch aus Ethylen und Sauerstoff, das gegebenenfalls Regler und Comonomere enthalten kann, wird an der Einlaßstelle dem Reaktor zugeführt. Unter Einlaßstelle wird im allgemeinen der Anfang des rohrförmigen Reaktors verstanden.

Ein großer Vorteil des erfindungsgemäßen Verfahrens ist es aber, daß die Polymerisation auch ohne Zufuhr von Luftsauerstoff durchgeführt werden kann. Die Initiierung der Polymerisationsreaktion erfolgt erst durch die Zugabe des Initiators über den ersten Einspritzfinger.

Durch die üblichen Regler, z.B. Kohlenwasserstoffe wie Propan, Propen usw., Ketone, wie Aceton, Methylethylketon usw. oder Aldehyde wie Propionaldehyd kann das Molekulargewicht des anfallenden Polymerisats auf den gewünschten Wert gebracht werden.

Durch das erfindungsgemäße Verfahren wird an mindestens einer zweiten Stelle hinter der Einlaßstelle ein Initiator oder Initiatorgemisch über einen Einspritzfinger in das Polymerisationssystem eingeführt.

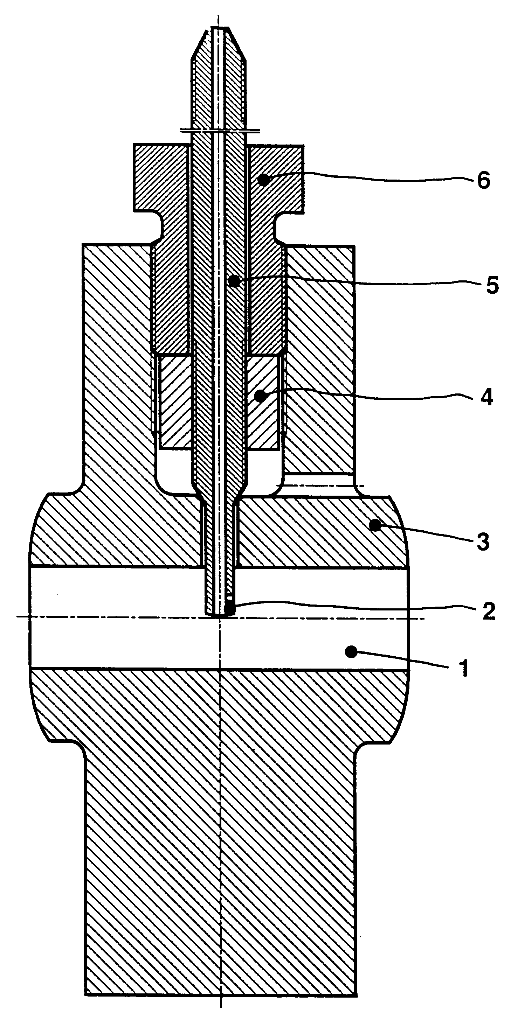

In der Abbildung ist die dazu erforderliche Vorrichtung dargestellt. Der Rohrreaktor besteht aus der Rohrreaktorkammer (1) und dem Rohrreaktorgehäuse (3). In die Rohrreaktorkammer (1) ragt der Einspritzfinger (2), der das eine Ende des Einspritzrohres (5) bildet und über Gewindebund (4) und Druckschraube (6) mit dem Reaktorgehäuse (3) verbunden ist. Mit Hilfe geeigneter Pumpen wie beispielsweise schnellaufende Dosierpumpen, wird der Initiator über das Einspritzrohr (5) und den Einspritzfinger (3) in die Rohrreaktorkammer (1) eingeführt.

Als Initiator sind diejenigen des Standes der Technik geeignet, wie beispielsweise Diisopropylbenzolhydroperoxid, Di-tert.-Butylperoxid, Cumolhydroperoxid, Tert.-butylperisononat, Methylisobutylketonperoxid, oder deren Gemische. Bevorzugt werden t-Butylperpivalat, t-Butylperisononat und Methylisobutylketonperoxid verwendet.

Die Initiatoren werden bevorzugt in organischen Lösungsmitteln gelöst. Geeignete Lösungsmittel sind beispielsweise aliphatische Kohlenwasserstoffe wie Octan oder Benzin oder inerte Lösungsmittel wie Chlorbenzol, Cyclohexan oder Methanol. Die Konzentration der organischen Initiatorlösungen liegen üblicherweise bei 1 bis 30, bevorzugt 5 bis 25 Gew.-%.

Die für das zuführende Initiatoren erforderliche Mengen an Lösungsmittel sind im Verhältnis zur Menge Ethylen gering und betragen im allgemeinen jeweils 0,01 bis 5 Gew.-%, vorzugsweise 0,1 bis 2 Gew.-%, bezogen auf die Menge Reaktionsgas. Die Initiatoren enthaltende Lösung wird dabei an mindestens einer zweiten Stelle, bevorzugt an zwei weiteren Stellen nach der Einlaßstelle mit Hilfe von schnellaufenden Dosierpumpen über jeweils einen Einspritzfinger (2) in das Reaktionsgemisch der Rohrreaktorkammer (1) zudosiert.

Die Ethylenhomo- und Copolymerisate liegen im Dichte-Bereich von 0,915 bis 0,935 g/cm$^3$, bevorzugt 917 bis 933 g/cm$^3$ und weisen einen MFI [190/2,16] von 0,05 bis 100 g/10 Minuten, bevorzugt 0,1 bis 30 g/10 Minuten und besonders bevorzugt 0,15 bis 20 g/10 Minuten auf.

Mit den erfindungsgemäßen Verfahren lassen sich aber auch Ethylenhomo- und Copolymerisate mit niedrigem Molekulargewicht, sogenannte Polyolefin-Wachse herstellen, die einen Viskositätsbereich von 50 x $10^{-6}$ bis 5000 x $10^{-6}$ m$^2$.s$^{-1}$ (50 bis 5000 cst.), bevorzugt 500 x $10^{-6}$ bis 2000 x $10^{-6}$ m$^2$.s$^{-1}$ (500 bis 2000 cst.) aufweisen.

Beispiele

Die Polymerisation von Ethylen bzw. Ethylen/Comonomer-Gemischen wurde in einem rohrförmigen Reaktor mit einem Längen/Durchmesser-Verhältnis von etwa 20000 durchgeführt. Dieser Reaktor wurde als solcher oder auch einem geschaltet betrieben. Das Ethylen bzw. Ethylen/Comonomer-Gemisch wurde mit einem Molekulargewichtsregler versetzt und auf Reaktionsdruck komprimiert. Nachdem das Reaktionsgas die Einlaßstelle des Reaktors passiert hatte, wurden mit Hilfe von Dosierpumpen Lösungen von radikalisch zerfallenden Initiatoren wie z.B. organische Peroxide und Hydroperoxide, meist in organischen Lösemitteln wie z.B. Isododekan gelöst, an einer oder mehreren Stellen des Rohrreaktors eingespritzt, um so die Polymerisation zu starten. Die Lage des bzw. der Temperaturmaxima in diesem Rohrreaktor konnte durch geeignete Maßnahmen, wie z.B. Anheben oder Absenken der Temperatur des Vorwärmers, Anheben oder Absenken der Temperatur des Kühlwassers im Reaktor an verschiedenen Stellen verlagert werden. Die Absoluttemperaturen des Reaktionsgemisches konnten durch Variation der Initiatormenge bzw. der Reaktionsgasmenge beliebig eingestellt werden.

EP 0 449 092 B1

Das so erhaltene Produkt wurde in bekannter Weise in den dem Reaktor nachgeschalteten Abscheidern von nicht umgesetzten Monomeren abgetrennt.

Beispiel 1

Dem oben beschriebenen Reaktor wurde bei einem Reaktionsdruck von 2800 bar, gemessen an der Zulaufstelle, Ethylen zugeführt. An zwei Stellen entlang des Rohrreaktors wurden Peroxid-Gemische aus gleichen Gewichtsteilen t-Butylperpivalat, t-Butylperisononat und Methylisobutylketonperoxid, 10 %ig in Isododecan unter Verwendung der oben beschriebenen Einspritzfinger zugeführt.

Die Maximaltemperatur nach der ersten Einspritzstelle betrug 295°C, die Maximaltemperatur nach der zweiten Einspritzstelle betrug 299°C. Als Molekulargewichtsregler wurde Propionaldehyd zugesetzt, die Reglermenge wurde so bemessen, daß sich ein Molekulargewicht entsprechend eines Schmelzindexes MFI von 0,75 g/10 Minuten, gemessen nach DIN-53 735, einstellt.

Vergleichsbeispiel 1A

Dem Reaktor gemäß Beispiel 1 wurde bei einem Reaktionsdruck von 2800 bar, gemessen an der Zulaufstelle, Ethylen zugeführt. An den selben Stellen des Reaktors wie bei Beispiel 1 wurden identische Peroxid-Lösungen, wie in Beispiel 1 verwendet, eingespritzt, allerdings ohne die Verwendung von Einspritzfingern. Alle anderen Parameter wurden analog zu 1 eingestellt. So betrug die Maximaltemperatur nach der ersten Einspritzstelle 295°C, die Maximaltemperatur nach der zweiten Einspritzstelle 299°C. Als Molekulargewichtsregler wurde ebenfalls Propionaldehyd verwendet. Die Reglermenge wurde so bemessen, daß sich ein Molekulargewicht entsprechend eines Schmelzindex MFI von 0,76 g/10 Minuten gemessen nach DIN 53 735, einstellt.

Beispiel 2

Dem oben beschriebenen Reaktor wurde bei einem Reaktionsdruck von 2600 bar, gemessen an der Zulaufstelle, Ethylen zugeführt. An zwei Stellen entlang des Rohrreaktors wurden jeweils verschiedene Peroxid-Gemische 10 %ig in Isododecan unter Verwendung der oben beschriebenen Einspritzfinger zugeführt. Das erste Peroxidgemisch bestand aus gleichen Gewichtsteilen t-Butylperpivalat und t-Butylperisononat und das zweite Peroxidgemisch bestand aus gleichen Gewichtsteilen Methylisobutylketonperoxid und t-Butylperisononat.

Die Maximaltemperatur nach der ersten Einspritzstelle betrug 292°C, die Maximaltemperatur nach der zweiten Einspritzstelle betrug 292°C. Als Molekulargewichtsregler wurde Propionaldehyd zugesetzt, die Reglermenge wurde so bemessen, daß sich ein Molekulargewicht entsprechend eines Schmelzindexes MFI von 0,65 g/10 Minuten, gemessen nach DIN 53 735, einstellt.

Vergleichsbeispiel 2A

Dem Reaktor gemäß Beispiel 2 wurde bei einem Reaktionsdruck von 2600 bar, gemessen an der Zulaufstelle, Ethylen zugeführt. An denselben Stellen des Reaktors wie bei Beispiel 2 wurden identische Peroxid-Lösungen, wie in Beispiel 1 verwendet, eingespritzt, allerdings ohne die Verwendung von Einspritzfingern. Alle anderen Parameter wurden analog zu 1 eingestellt. So betrug die Maximaltemperatur nach der ersten Einspritzstelle 292°C, die Maximaltemperatur nach der zweiten Einspritzstelle 292°C. Als Molekulargewichtsregler wurde ebenfalls Propionaldehyd verwendet. Die Reglermenge wurde so bemessen, daß sich ein Molekulargewicht entsprechend eines Schmelzindex MFI von 0,65 g/10 Minuten gemessen nach DIN 53 735, einstellt.

Beispiel 3

Das Beispiel 2 wurde wiederholt mit dem unterschied, daß entsprechend der Tabelle mehr Peroxid pro Mol umgesetztes Ethylen verwendet wurde.

Vergleichsbeispiel 3A

Vergleichsbeispiel 2A wurde wiederholt mit dem Unterschied, daß entsprechend der Tabelle mehr Peroxid pro Mol umgesetztes Ethylen verwendet wurde.

4

| Beispiel | Umsatz[1] | MFI[2] | Dichte[3] | Peroxid-verbrauch[4] | Streu[5] |
|---|---|---|---|---|---|
| 1 | 29,4 | 0,75 | 0,9245 | 10,0 | 19 |
| 1A | 28,8 | 0,76 | 0,9244 | 12,6 | 24 |
| 2 | 26,6 | 0,65 | 0,9246 | 12,4 | 20 |
| 2A | 27,3 | 0,65 | 0,9249 | 13,5 | 24 |
| 3 | 25,0 | 4,0 | 0,9325 | 9,5 | 9 |
| 3A | 35,0 | 2,0 | 0,9182 | 18,2 | 35 |

1) Menge an Polymerisat, bezogen auf die Gesamtethylenmenge. Berechnet in Gewichtsprozent.

2) melt flow index in g/10 Minuten, gemessen nach DIN 53735.

3) Dichte des Polymerisats in $g/cm^3$ nach DIN 53 479

4) mol ppm Peroxid bzw. Hydroperoxid pro mol umgesetztes Ethylen

5) Lichtstreuung der Folie in % nach DIN 53 490, vgl. Kunststoffe Band 56, 350–354 (1968).

## Patentansprüche

1. Verfahren zur Herstellung von Ethylenpolymerisaten durch Homopolymerisation von Ethylen oder Copolymerisation von Ethylen mit Ethylen copolymerisierbaren Verbindungen in einem kontinuierlich betriebenen rohrförmigen Polymerisationssystem bei Drücken von 500 bis 5000 bar und Temperaturen von 40 bis 450 °C in Gegenwart von radikalisch zerfallenden Polymerisationsinitiatoren, indem man dem Polymerisationssystem an dessen Einlaßstelle Ethylen, gegebenenfalls im Gemisch mit Comonomer, Sauerstoff und/oder Regler und mindestens an einer zweiten Stelle hinter der Einlaßstelle einen Initiator zuführt, dadurch gekennzeichnet, daß man den Initiator über einen Einspritzfinger in das Polymerisationssystem einführt.

**2.** Verfahren nach Anspruch 1, dadurch gekennzeichnet, daß man den Initiator an zwei Stellen hinter der Einlaßstelle jeweils über einen Einspritzfinger in das Polymerisationssystem einführt.

**3.** Verfahren nach Anspruch 1 oder 2, dadurch gekennzeichnet, daß man ein Gemisch von Initiatoren in das Polymerisationssystem einführt.

**4.** Verfahren nach einem der Ansprüche 1 bis 3, dadurch gekennzeichnet, daß man eine organische Lösung eines Initiators oder Initiatorgemisches in das Polymerisationssystem einführt.

**5.** Vorrichtung zur Durchführung des Verfahrens gemäß einem der Ansprüche 1 bis 4, dadurch gekennzeichnet, daß sie aus einer Rohrreaktorkammer (1) mit dem Rohrreaktorgehäuse (3) besteht, in die der Einspritzfinger (2) des Einspritzrohres (5) ragt, das mit der Druckschraube (6) am Reaktorgehäuse (3) befestigt ist.

**Claims**

**1.** A process for the preparation of an ethylene polymer by homopolymerizing ethylene or copolymerizing ethylene with an ethylene-copolymerizable compound in a continuous, tubular polymerization system at from 500 to 5,000 bar and from 40 to 450°C in the presence of a free-radical polymerization initiator, by supplying the polymerization system, at its inlet point, with ethylene, alone or mixed with a comonomer, oxygen and/or regulator, and, at at least one second point after the inlet point, with an initiator, which comprises introducing the initiator into the polymerization system via an injection finger.

**2.** A process as claimed in claim 1, wherein the initiator is introduced into the polymerization system at two points after the inlet point, in each case via an injection finger.

**3.** A process as claimed in claim 1 or 2, wherein a mixture of initiators is introduced into the polymerization system.

**4.** A process as claimed in any of claims 1 to 3, wherein an organic solution of an initiator or initiator mixture is introduced into the polymerization system.

**5.** An apparatus for carrying out the process as claimed in any of claims 1 to 4, which comprises a tubular reactor chamber (1) with casing (3), into which the injection finger (2) of the injection tube (5) projects, the tube being attached to the reactor casing (3) by means of the pressure screw (6).

**Revendications**

**1.** Procédé de préparation de polymères d'éthylène par homopolymérisation d'éthylène ou copolymérisation d'éthylène et de composés copolymérisables avec l'éthylène dans un système tubulaire de polymérisation fonctionnant en continu à des pressions de 500 à 5000 bar et à des températures de 40 à 450°C en présence d'amorceurs de polymérisation se décomposant par voie radicalaire, dans lequel on introduit dans le système de polymérisation, à l'endroit prévu pour son alimentation, de l'éthylène, éventuellement en mélange avec un comonomère, de l'oxygène et/ou un régulateur et au moins un amorceur, en un second endroit situé en aval de l'endroit prévu pour l'alimentation, caractérisé en ce que l'on introduit l'amorceur dans le système de polymérisation au moyen d'un doigt d'injection.

**2.** Procédé selon la revendication 1, caractérisé en ce que l'on introduit l'amorceur dans le système de polymérisation en deux endroits situés en aval de l'endroit prévu pour l'alimentation, chaque fois au moyen d'un doigt d'injection.

**3.** Procédé selon la revendication 1 ou 2, caractérisé en ce que l'on introduit dans le système de polymérisation un mélange d'amorceurs.

**4.** Procédé selon l'une quelconque des revendications 1 à 3, caractérisé en ce que l'on introduit dans le système de polymérisation une solution organique d'un amorceur ou d'un mélange d'amorceurs.

5. Dispositif pour la mise en oeuvre du procédé selon l'une quelconque des revendications 1 à 4, caractérisé en ce qu'il est constitué d'une chambre tubulaire (1) de réacteur ayant une enveloppe tubulaire (3) de réacteur, et dans laquelle fait s illie le doigt d'injection (2) du tube d'injection (5), ce dernier étant fixé à l'enveloppe (3) de réacteur au moyen de la vis de pression (6).

6

5

4

3

2

1